(19) **Europäisches Patentamt**

**European Patent Office**

**Office européen des brevets**

(11) **EP 1 195 579 B1**

(12) **EUROPÄISCHE PATENTSCHRIFT**

(45) Veröffentlichungstag und Bekanntmachung des Hinweises auf die Patenterteilung:
**19.04.2006 Patentblatt 2006/16**

(21) Anmeldenummer: **01122807.9**

(22) Anmeldetag: **22.09.2001**

(51) Int Cl.:
***G01D 5/244*** *(2006.01)*

(54) **Verfahren zur absoluten Positionsbestimmung**

Method for determining the absolute position

Procédé de détermination de la position absolue

(84) Benannte Vertragsstaaten:
**AT BE CH CY DE DK ES FI FR GB GR IE IT LI LU MC NL PT SE TR**

(30) Priorität: **06.10.2000 DE 10049502**

(43) Veröffentlichungstag der Anmeldung:
**10.04.2002 Patentblatt 2002/15**

(73) Patentinhaber: **Dr. Johannes Heidenhain GmbH 83292 Traunreut (DE)**

(72) Erfinder: **Oberhauser, Johann 83377 Vachendorf (DE)**

(56) Entgegenhaltungen:
**EP-A- 0 369 031     EP-A- 0 704 678**
**DE-A- 3 046 797     DE-A- 19 641 035**
**FR-A- 2 563 907     US-A- 4 803 354**

EP 1 195 579 B1

**Beschreibung**

Die vorliegende Erfindung betrifft ein Verfahren gemäß dem Oberbegriff des Anspruches 1.

Eine gattungsgemäße Vorrichtung bzw. ein gattungsgemäßes Verfahren zur absoluten Positionsbestimmung ist z.B. aus Figur 1 der EP 0 369 031 B1 bekannt. Hierbei werden aus der Abtastung mehrerer Messteilungen unterschiedlicher Teilungsperioden Abtastsignale mit unterschiedlichen Signalperioden gewonnen. Unter den Abtastsignalen ist auch ein Signal, das lediglich eine Signalperiode über die Messdistanz liefert und somit zur Bestimmung einer groben Absolutpositionsinformation geeignet ist. Die verschiedenen Abtastsignale werden interpoliert und anschließend zu einer Absolutpositionsinformation kombiniert. Die Absolutpositionsinformation besitzt eine Auflösung, die den hochauflösendsten Abtastsignalen entspricht. Um über die Kombination der verschiedenen Abtastsignale mit differierenden Signalperioden eine Absolutposition korrekt zu bestimmen, muss eine definierte Relativphasenlage der verschiedenen Abtastsignale gewährleistet sein. Liegt ein undefinierter Phasenversatz zwischen den periodischen Abtastsignalen unterschiedlicher Signalperiode vor - wie etwa in Fig. 5 der EP 0 369 031 B1 veranschaulicht - so resultiert bei der Ermittlung der Absolutpositionsinformation ein Fehler. Ein derartiger undefinierter Phasenversatz kann beispielsweise durch fertigungsbedingte Toleranzen in den abgetasteten Messteilungen oder seitens der jeweiligen Abtasteinheiten bedingt sein.

In der EP 0 369 031 B1 wird zur Lösung dieser Problematik daher vorgeschlagen, die Abtastsignale benachbarter Spuren in Bezug auf eine ideale Phasenlage zueinander zu korrigieren. Hierzu werden die interpolierten Abtastsignale benachbarter Messteilungs-Spuren mit Phasenkorrekturwerten beaufschlagt. Über ein iteratives Verfahren erfolgt zu mehreren Sampling-Zeitpunkten die Bestimmung eines geeigneten Korrekturwertes zur Phasenlagekorrektur, indem überlappende Bereiche digitaler Positionsdatenwörter in benachbarten Spuren unterschiedlicher Auflösung miteinander verglichen werden. Das vorgeschlagene Vorgehen zur Korrekturwert-Bestimmung erfordert jedoch einen nicht unerheblichen schaltungstechnischen Aufwand. Zudem ist beim Vorliegen eines großen Phasenlage-Fehlers zu einem der Sampling-Zeitpunkte nicht sichergestellt, dass ein richtiger Korrekturwert ermittelt werden kann.

Aufgabe der vorliegenden Erfindung ist es daher, das gattungsgemäße Verfahren dahingehend weiterzubilden, dass mit möglichst geringem schaltungstechnischem Aufwand eine zuverlässige Phasenlage-Korrektur zwischen den Abtastsignalen unterschiedlicher Messteilungen gewährleistet ist.

Diese Aufgabe wird gelöst durch ein Verfahren mit den Merkmalen im kennzeichnenden Teil des Anspruches 1.

Vorteilhafte Ausführungsformen des erfindungsgemäßen Verfahrens ergeben sich aus den Maßnahmen, die in den von Anspruch 1 abhängigen Patentansprüchen aufgeführt sind.

Die erfindungsgemäßen Maßnahmen gewährleisten nunmehr, dass über die gesamte Messdistanz eine Phasenlage der Abtastsignale benachbarter Messteilungen resultiert, die eine korrekte Bestimmung der Absolutposition aus diesen Signalen erlaubt. Hierzu wird über eine dem Messbetrieb vorangehende Kalibriermessung entlang der vollständigen Messdistanz ein geeigneter Phasenkorrekturwert für zumindest einen Teilabschnitt ermittelt. Der derart bestimmte Phasenkorrekturwert stellt sicher, dass im eigentlichen Messbetrieb ein maximal tolerierbarer Phasenversatz zwischen den verschiedenen ersten und zweiten Abtastsignalen in diesem Teilabschnitt nicht überschritten wird. Wird der Teilabschnitt gleich der kompletten Messdistanz gewählt, so ist lediglich ein einziger Phasenkorrekturwert erforderlich. Alternativ hierzu kann die Messdistanz auch in mehrere Teilabschnitte unterteilt werden, für die jeweils separate Phasenkorrekturwerte erfindungsgemäß ermittelt und positionsabhängig abgespeichert werden; die Messdistanz ergibt sich in diesem Fall aus der Summe der verschiedenen Teilabschnitte. Im Messbetrieb erfolgt dann das positionsabhängige Auslesen der für den jeweiligen Teilabschnitt benötigten Phasenkorrekturwerte aus einer tabellenförmig organisierten Speichereinheit.

Die hierzu erforderliche Vorrichtung ist schaltungstechnisch einfach aufgebaut und kann je nach den Anforderungen an das Messsystem auch erweitert werden.

Das erfindungsgemäße Vorgehen lässt sich in Verbindung mit verschiedenartigsten Messsystemen einsetzen und ist insbesondere nicht auf ein bestimmtes Abtastprinzip beschränkt. Ferner kann die vorliegende Erfindung in Längenmesssystemen ebenso realisiert werden wie in rotatorischen Messsystemen.

Weitere Vorteile sowie Einzelheiten der vorliegenden Erfindung ergeben sich aus der nachfolgenden Beschreibung eines Ausführungsbeispieles anhand der beiliegenden Figuren.

Dabei zeigt

Figur 1      ein schematisiertes Blockschaltbild einer Vorrichtung;

Figur 2      eine Darstellung der ersten und zweiten Abtastsignale entlang der Messdistanz D im fehlerfreien Fall;

Figur 3      eine Darstellung zur Erläuterung eines vorliegenden Phasenfehlers;

Figur 4      eine Darstellung der ersten und zweiten Abtastsignale entlang der Messdistanz D beim Vorliegen eines Phasenfehlers;

Figur 5      die Darstellung der Figur 3 nach erfolgter erfindungsgemäßer Korrektur des Phasenfehlers.

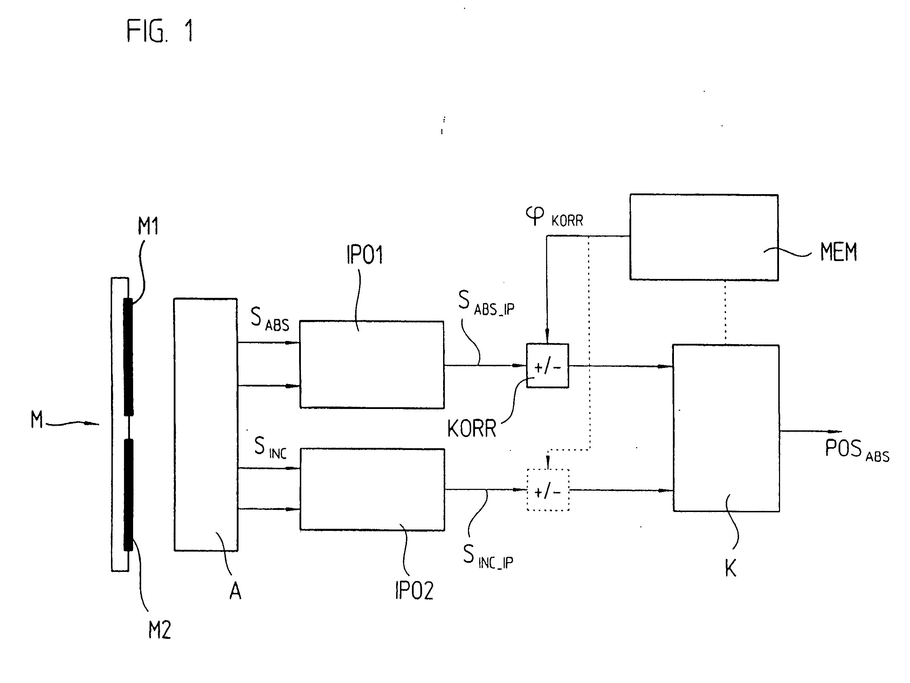

Ein Ausführungsbeispiel ist in Figur 1 in einer schematischen Blockschaltbild-Darstellung gezeigt. Erkennbar ist hierbei ein Maßstab M, der zwei Messteilungen M1, M2 umfasst und von einer relativ zum Maßstab beweglichen Abtasteinheit A im Messbetrieb zur Erzeugung positionsabhängiger Signale abgetastet wird.

Die beiden Messteilungen M1, M2 erstrecken sich über die gesamte Messdistanz D und weisen unterschiedliche Teilungsperioden $TP_{ABS}$, $TP_{INC}$ auf. Hierbei gestattet die Teilungsperiode $TP_{ABS}$ der ersten Messteilung M1 die Erzeugung von Abtastsignalen $S_{ABS}$, die innerhalb der Messdistanz D eine grobe Absolutpositionsinformation liefern. Beispielsweise kann die Messteilung M1 derart ausgestaltet sein, dass entlang der Messdistanz D eine einzige Signalperiode eines sinusförmigen Abtastsignales $S_{ABS}$ resultiert. Die Teilungsperiode $TP_{INC}$ der zweiten Messteilung M2 wird hingegen feiner gewählt als die Teilungsperiode $TP_{ABS}$ der ersten Messteilung M1 und ermöglicht die Erzeugung von inkrementalen Abtastsignalen $S_{INC}$ mit einer höheren Auflösung. So kann z.B. vorgesehen werden, die Teilungsperiode $TP_{INC}$ der zweiten Messteilung M2 derart auszugestalten, dass entlang der Messdistanz D insgesamt N = 8 Signalperioden der periodischen Abtastsignale $S_{INC}$ resultieren.

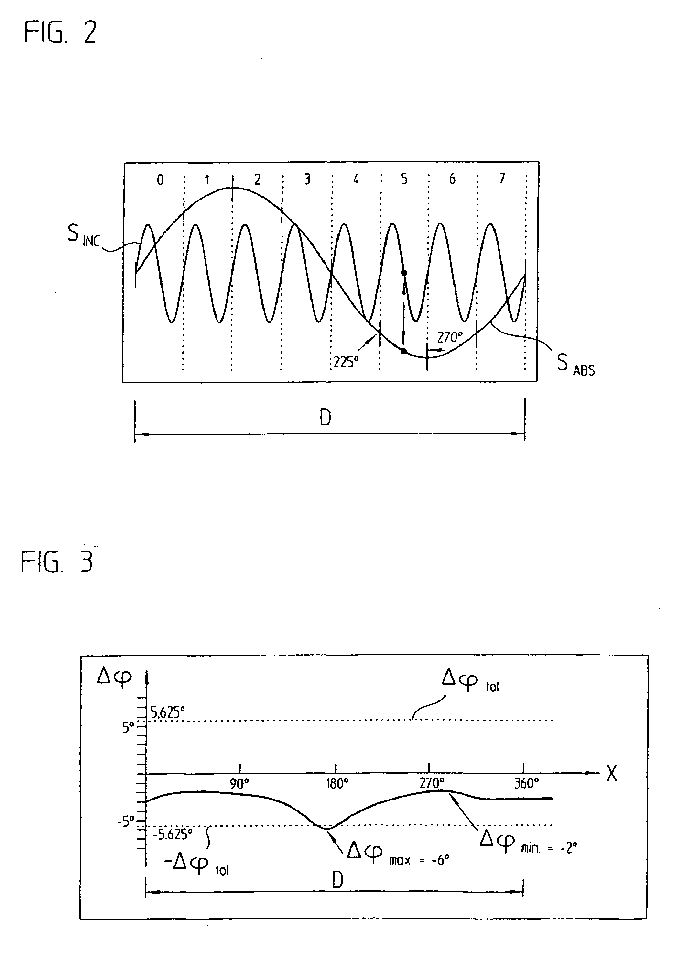

In Figur 2 sind die diesem Beispiel entsprechenden analogen Abtastsignale $S_{ABS}$, $S_{INC}$ über die gesamte Messdistanz D im fehlerfreien Fall dargestellt.

Die analogen Abtastsignale $S_{ABS}$, $S_{INC}$ werden jeweils digitalen Interpolatoreinheiten IPO1, IPO2 zugeführt, in denen aus den analogen Abtastsignalen $S_{ABS}$, $S_{INC}$ in bekannter Art und Weise interpolierte, digitale Datenwörter respektive interpolierte Abtastsignale $S_{ABS\_IPO}$, $S_{INC\_IPO}$ erzeugt werden. Anschließend erfolgt mittels der Speichereinheit MEM und der Korrektureinheit KORR die nachfolgend noch zu erläuternde Korrektur eines eventuell vorliegenden Phasenversatzes zwischen den ersten und zweiten Abtastsignalen $S_{ABS}$, $S_{INC}$, ehe die interpolierten Abtastsignale $S_{ABS\_IPO}$, $S_{INC\_IPO}$ einer Kombinationseinheit K zugeführt werden. Die Kombinationseinheit K kombiniert die interpolierten und phasenkorrigierten ersten und zweiten Abtastsignale $S_{ABS\_IPO}$, $S_{INC\_IPO}$ schließlich zu einem digitalen Datenwort bzgl. einer Absolutpositionsinformation $POS_{ABS}$, wobei die Absolutpositionsinformation $POS_{ABS}$ eine Auflösung aufweist, die der Auflösung der zweiten Abtastsignale $S_{INC}$ bzw. der damit gewonnenen Relativpositionsinformation entspricht. Die derart gewonnene Absolutpositionsinformation $POS_{ABS}$ steht dann einer - nicht dargestellten - Folgeelektronik zur Weiterverarbeitung zur Verfügung, beispielsweise einer numerischen Werkzeugmaschinensteuerung.

Üblicherweise wird bei der Abtastung der beiden Messteilungen M1, M2 in bekannter Art und Weise jeweils ein Paar von um 90° phasenversetzten Abtastsignalen $S_{ABS}$, $S_{INC}$ erzeugt, was durch die jeweils zwei Pfeile zwischen der Abtasteinheit A und den nachgeordneten Signalverarbeitungskomponenten veranschaulicht werden soll.

In einer bevorzugten Ausführungsform der Vorrichtung dient diese zur Erfassung rotatorischer Bewegungen, d.h. der Maßstab M ist als Teilscheibe ausgebildet, auf der zwei konzentrisch zur Drehachse angeordnete Spuren mit den beiden Messteilungen M1, M2 angeordnet sind. Die Messdistanz D entspricht in diesem Fall dem Umfang der Teilscheibe. Im Beispiel der Figur 2 entspricht D somit einer Vollumdrehung der Teilscheibe von 360°.

Zur Erzeugung der Abtastsignale $S_{ABS}$, $S_{INC}$ aus der Abtastung der Messteilungen M1, M2 können selbstverständlich unterschiedlichste physikalische Abtastprinzipien eingesetzt werden, beispielsweise optische, magnetische, kapazitive oder aber induktive Abtastprinzipien. In Bezug auf die geeignete Ausgestaltung einer induktiv arbeitenden Vorrichtung sei beispielsweise auf die EP 845 659 A2 der Anmelderin verwiesen.

Alternativ zu einer rotatorischen Messanordnung kann jedoch selbstverständlich auch eine lineare Messanordnung erfindungsgemäß ausgestaltet werden. Ebenso könnten grundsätzlich auch noch mehr Messteilungen respektive Abtastsignale seitens einer Vorrichtung vorgesehen werden, die prinzipiell auf die erfindungsgemäße Art und Weise phasenkorrigiert werden.

Anhand der Figuren 3-5 sowie Figur 1 sei nunmehr das erfindungsgemäße Vorgehen näher erläutert. Figur 3 zeigt das Ergebnis einer Kalibriermessung, die dem eigentlichen Messbetrieb der Positionsbestimmungs-Vorrichtung vorangeht. Aufgetragen ist als Abszisse die zu messende Position x; hierbei stellt die vollständige Messdistanz D wie bereits im Beispiel der Figur 2 eine Vollumdrehung der Teilscheibe um 360° dar, d.h. die Position x entspricht einem Winkelwert zwischen 0° und 360°. Als Ordinate ist in positiver und negativer Richtung die per Kalibriermessung ermittelte Phasenlageabweichung $\Delta\varphi(x)$ aufgetragen, wobei sich die Größe $\Delta\varphi(x)$ entlang der Messdistanz gemäß

$$\Delta\varphi(x) := \varphi_{ABS,SOLL}(x) - \varphi_{ABS,IST}(x) \qquad \text{Gl. (1)}$$

ergibt.

Gemäß Gleichung (1) stellt die Größe $\Delta\varphi(x)$ die Abweichung der Phasenlage der ersten Abtastsignale $S_{ABS}$ von einer Soll-Phasenlage dar. Die Soll-Phasenlage ist hierbei durch die ideale Phasenlage der ersten Abtastsignale $S_{ABS}$ zu den in diesem Beispiel als Referenz verwendeten zweiten Abtastsignalen $S_{INC}$ definiert.
Die Größe $\varphi_{ABS,SOLL}(x)$ gibt hierbei den absoluten Soll-Positionswert der ersten Abtastsignale $S_{ABS}$ an einer Position x an, während die Größe $\varphi_{ABS,IST}$ den tatsächlichen Ist-Positionswert der ersten Abtastsignale $S_{ABS}$ an der Position x angibt und damit die ideale Phasenlage charakterisiert.

Lägen idealerweise keine Abweichungen von der Soll-Phasenverschiebung vor, so würde die Phasenlageabweichung $\Delta\varphi(x)$ über die gesamte Messdistanz D $\Delta\varphi(x) = 0$ betragen. Wie aus Figur 3 jedoch hervorgeht, weicht die Phasentageabweichung $\Delta\varphi(x)$ über die Messdistanz D vom Idealwert $\Delta\varphi(x) = 0$ positionsabhängig ab, d.h. es liegt eine Abweichung zwischen der Soll-und Ist-Phasenverschiebung der ersten und zweiten Abtastsignale $S_{ABS}$, $S_{INC}$ vor, beispielsweise verursacht durch Toleranzen in der Fertigung der entsprechenden Teilscheibe.

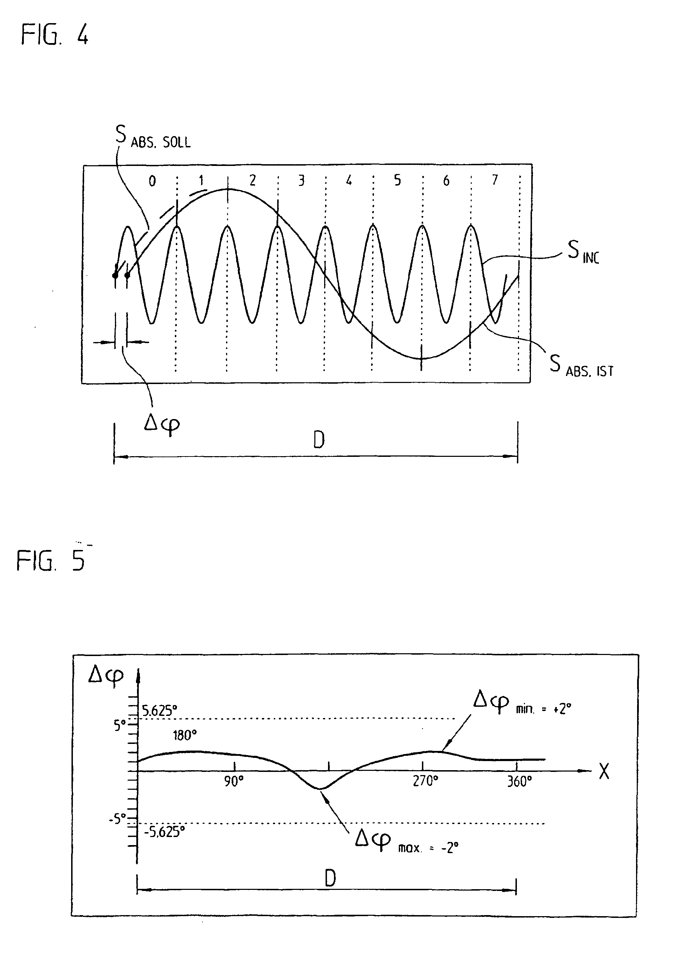

In Figur 4 ist zur Veranschaulichung der Größe $\Delta\varphi(x)$ eine Darstellung der ersten Istwert-Abtastsignale $S_{ABS,IST}$, der zweiten Abtastsignale $S_{INC}$ gemäß Figur 2 gezeigt, wobei über der gesamten Messdistanz D eine konstante Phasenlageabweichung $\Delta\varphi(x) = const.$ vorliegt. Dies bedeutet, dass etwa die ersten Abtastsignale $S_{ABS}$ über die gesamte Messdistanz D gegenüber der idealen Phasenlage um den festen Betrag $\Delta\varphi(x) = const.$ verschoben sind. Zur Veranschaulichung der Phasenlageabweichung $\Delta\varphi$ ist in Figur 4 gestrichelt ein Teil der ersten Sollwert-Abtastsignale $S_{ABS,SOLL}$ dargestellt.

Um - wie bereits oben diskutiert - sicherzustellen, dass aus der Kombination der ersten und zweiten Abtastsignale $S_{ABS}$, $S_{INC}$ keine falsche Absolutposition ermittelt wird, darf die Phasenlageabweichung $\Delta\varphi(x)$ einen bestimmten Phasenlage-Toleranzbetrag $\pm\Delta\varphi_{tot}$ nicht überschreiten. Der Phasenlage-Toleranzbetrag $\pm\Delta\varphi_{tot}$ hängt hierbei von den gewählten Periodizitäten der ersten und zweiten Abtastsignale $S_{ABS}$, $S_{INC}$ ab. Im Beispiel der Figur 3 lieferten die ersten periodischen Abtastsignale $S_{ABS}$ eine einzige Signalperiode über die Messdistanz D und ermöglichten somit eine grobe Absolutpositionsbestimmung entlang der Messdistanz D. Die zweiten Abtastsignale $S_{INC}$ hingegen liefern N = 32 Signalperioden über die gesamte Messdistanz D und erlauben somit die Erzeugung einer Relativpositionsinformation mit einer höheren Auflösung als die ersten Abtastsignale $S_{ABS}$. Im Beispiel der Figur 3 beträgt der Phasenlage-Toleranzbetrag $\pm\Delta\varphi_{tol} = 5,625°$; die entsprechenden Grenzwerte sind in der Figur dargestellt. Liegt die Phasenlageabweichung $\Delta\varphi$ außerhalb des Toleranzbereiches, welcher durch den Phasenlage-Toleranzbetrag $\pm\Delta\varphi_{tol}$ vorgegeben ist, so ist keine korrekte Absolutpositionsbestimmung aus den Abtastsignalen $S_{ABS}$, $S_{INC}$ mehr möglich. Es muss demzufolge im eigentlichen Messbetrieb sichergestellt werden, dass der Wert $\Delta\varphi$ der Ablage der Soll-Phasenlage von der Ist-Phasenlage stets innerhalb des erwähnten Toleranzbereiches bleibt, dessen Grenzen durch den Phasenlage-Toleranzbetrag $\pm\Delta\varphi_{tol}$ definiert sind.

Allgemein lässt sich in einer Positionsmesseinrichtung, in der - ähnlich zum obigen Beispiel - erste Abtastsignale $S_{ABS}$ mit einer Signalperiode über die Messdistanz D sowie zweite Abtastsignale $S_{INC}$ mit N Signalperioden über die Messdistanz D erzeugt werden, der Phasenlage-Toleranzbetrag $\pm\Delta\varphi_{tol}$ bzgl. der Relativ-Phasenlage der Abtastsignale folgendermaßen angeben:

$$\pm\Delta\varphi_{tol} = \pm180°/N \qquad\qquad \text{Gl. (2)}$$

Wenn wie im vorliegenden Fall der Figur 3 in einer Kalibriermessung festgestellt wird, dass die Phasenlageabweichung $\Delta\varphi(x)$ nicht über die gesamte Messdistanz D innerhalb des Toleranzbereiches liegt, so wird erfindungsgemäß auf Basis der Ergebnisse der Kalibriermessung ein Phasenkorrekturwert $\varphi_{korr}$ derart bestimmt, dass zumindest entlang eines bestimmten Teilabschnittes der Messdistanz D ein maximal tolerierbarer Phasenversatz zwischen den ersten und zweiten Abtastsignalen $S_{ABS}$, $S_{INC}$ nicht überschritten wird. Im Beispiel der Figur 3 liegt etwa bei der Position x ≈ 170° eine Phasenlageabweichung $\Delta\varphi$ vor, die außerhalb des durch $\pm\Delta\varphi_{tol}$ definierten Toleranzbereiches liegt und demzufolge zu einem Fehler in der Absolutpositionsbestimmung führen würde. Um derartige Fehlmessungen zu vermeiden, wird in einer bevorzugten Variante der vorliegenden Erfindung mindestens ein Phasenkorrekturwert $\varphi_{korr}$ ermittelt, der zumindest über einen Teilabschnitt der Messdistanz D der nachfolgenden Bedingung genügt:

$$| \Delta\varphi + \varphi_{korr} | < \pm\Delta\varphi_{tot} = 180°/N \qquad\qquad \text{Gl. (4)}$$

Eine besonders vorteilhafte Möglichkeit zur Bestimmung des Phasenkorrekturwertes $\varphi_{korr}$ besteht etwa in der Bildung eines Mitte/wertes aus den in der Kalibriermessung bestimmten Maxima $\Delta\varphi_{max}$ und Minima $\Delta\varphi_{min}$ des Phasenlageabweichungswertes $\Delta\varphi$ gemäß folgender Beziehung:

$$\varphi_{korr} = - (\Delta\varphi_{max} + \Delta\varphi_{min})/2 \qquad Gl. (5)$$

Im Beispiel der Figur 3 würde sich bei gemessenen Werten $\Delta\varphi_{max} = -6°$ und $\Delta\varphi_{min} = -2°$ demzufolge ein erforderlicher Phasenkorrekturwert $\varphi_{korr} = 4°$ ergeben.

In diesem Beispiel entspricht der Teilabschnitt somit der gesamten Messdistanz D, d.h. für die gesamte Messdistanz D wird lediglich ein einziger Phasenkorrekturwert ($\varphi_{korr}$ ermittelt und entsprechend im Messbetrieb zur Phasenlage-Korrektur verwendet.

Alternativ hierzu ist es aber auch möglich, die Messdistanz D in eine vorgegebene Anzahl n von Teilabschnitten $D_i$ (i = 1...n) zu zerlegen und für jeden Teilabschnitt $D_i$ in der oben erläuterten Art und Weise Phasenkorrekturwerte $\varphi_{korr,i}$ zu bestimmen. Die gesamte Messdistanz D entspricht in diesem Fall der Summe der verschiedenen Teilabschnitte $D_i$, beispielsweise kann die 360°-Vollumdrehung einer Teilscheibe in n=10 Teilabschnitte à 36° zerlegt werden und entsprechend 10 verschiedene Phasenkorrekturwerte $\varphi_{korr,i}$ (i = 1..10) bestimmt werden etc.. Dies heißt, dass in jedem Teilabschnitt $D_i$ wiederum Maxima $\Delta\varphi_{max}$ und Minima $\Delta\varphi_{min}$ der Phasenlageabweichung $\Delta\varphi(x)$ ermittelt werden und daraus gemäß Gl. (5) ein Phasenkorrekturwert $\varphi_{korr,i}$ für den jeweiligen Teilabschnitt $D_i$ als Mittelwert aus der maximalen und minimalen Phasenlageabweichung $\Delta\varphi_{max}, \Delta\varphi_{min}$ bestimmt wird.

Ein entsprechend ermittelter Phasenkorrekturwert ($\varphi_{korr}$ bzw. mehrere Phasenkorrekturwerte ($\varphi_{korr,i}$ werden in eine bzw. mehrere binäre Zahlen umgerechnet und in einer Speichereinheit MEM abgespeichert, wie in Figur 1 angedeutet. Im eigentlichen Messbetrieb werden dann über die Korrektureinheit KORR die interpolierten ersten Abtastsignale $S_{ABS\_IPO}$ mit dem Phasenkorrekturwert $\varphi_{korr}$ beaufschlagt, d.h. der entsprechende Phasenkorrekturwert $\Delta\varphi_{korr}$ zu den interpolierten Abtastsignalen $S_{ABS\_IPO}$ hinzuaddiert.

Im Fall mehrerer abgespeicherter Phasenkorrekturwerte $\varphi_{korr,i}$ werden diese für die verschiedenen Teilabschnitte in einer geeigneten tabellenförmig organisierten Speichereinheit positionsabhängig abgespeichert und im Messbetrieb positionsabhängig ausgelesen und zur Korrektur verwendet. Dieses Ausführungsbeispiel ist in Figur 1 durch die gestrichelte Verbindung zwischen der Speichereinheit MEM und der Kombinations-Einheit K angedeutet; hierdurch soll veranschaulicht werden, dass im Rahmen der vorliegenden Erfindung auch eine positionsabhängige Korrektur der Phasenlage erfolgen kann.
Je nach zur Verfügung stehender Speicherkapazität kann die gesamte Messdistanz D unterschiedlich fein in Teilabschnitte D, zerlegt werden, im Fall einer großen Speicherkapazität etwa in eine große Anzahl von Teilabschnitten, für die demzufolge auch eine große Anzahl von Phasenkorrekturwerten $\varphi_{korr,i}$ bestimmt werden. Hierbei ist insbesondere auch denkbar, die Teilabschnitte derart klein zu wählen, dass letztlich für jede Position entlang der Messdistanz D ein geeigneter Phasenkorrekturwert zur Verfügung steht.

In Figur 5 ist das Ergebnis einer nochmaligen Messung zu sehen, bei der die erfindungsgemäße Phasenkorrektur angewendet wurde. Deutlich erkennbar ist hierbei, dass nunmehr über die gesamte Messdistanz D die Phasenlageabweichung $\Delta\varphi(x)$ innerhalb des geforderten Toleranzbereiches bleibt und somit überall eine korrekte Bestimmung der Absolutposition möglich ist.

Während im Beispiel der Figur 1 lediglich die ersten interpolierten Abtastsignale $S_{ABS\_IPO}$ mit dem ermittelten Phasenkorrekturwert $\Delta\varphi_{korr}$ beaufschlagt werden, ist es selbstverständlich alternativ möglich, lediglich die zweiten Abtastsignale $S_{INC\_IPO}$ mit geeignet bestimmten Phasenkorrekturwerten $\Delta\varphi_{korr}$ zu beaufschlagen oder aber sowohl die ersten als auch die zweiten Abtastsignale mit den geeigneten Phasenkorrekturwerten zu beaufschlagen. Hierzu wäre dann entsprechend der zweiten Interpolatoreinheit IPO2 eine Korrektureinheit KORR' nachzuordnen, wie dies in Figur 1 angedeutet ist.

Im Rahmen der vorliegenden Erfindung existieren somit neben dem erläuterten Beispiel eine Reihe von weiteren alternativen Ausführungsvarianten.

## Patentansprüche

1. Verfahren zur absoluten Positionsbestimmung zweier zueinander beweglicher Objekte über eine bestimmte Messdistanz (D), bei dem

   - aus der Abtastung einer ersten Messteilung (M1) mit einer ersten Teilungsperiode ($TP_{ABS}$) erste periodische Abtastsignale ($S_{ABS}$) erzeugt werden,
   - aus der Abtastung einer zweiten Messteilung (M2) mit einer zweiten Teilungsperiode ($TP_{INC}$) zweite periodische Abtastsignale ($S_{INC}$) erzeugt werden, wobei die zweite Teilungsperiode ($TP_{INC}$) feiner als die erste Teilungsperiode ($TP_{ABS}$) gewählt ist,

- die ersten und zweiten Abtastsignale ($S_{ABS}$, $S_{INC}$) jeweils interpoliert werden und
- die ersten und/oder zweiten Abtastsignale ($S_{ABS}$, $S_{INC}$) in Bezug auf eine ideale Phasenlage zueinander korrigiert werden, indem die ersten und/oder zweiten interpolierten Abtastsignale ($S_{ABS\_IP}$, $S_{INC\_IP}$) mit Phasenkorrekturwerten ($\Delta\varphi_{korr}$) beaufschlagt werden,

**dadurch gekennzeichnet, dass**

ein über eine kalibriermessung bestimmter Phasenkorrekturwert ($\varphi_{korr}$, $\varphi_{korr,i}$) für mindestens einen Teilabschnitt ($D$, $D_i$) der Messdistanz ($D$) bestimmt wird, wobei sich der Phasenkorrekturwert ($\varphi_{korr}$) als Mittelwert aus der maximalen und minimalen Phasenlageabweichung ($\Delta\varphi_{max}$, $\Delta\varphi_{min}$) der Ist-Phasenlage von der Soll-Phasenlage im Teilabschnitt ($D$, $D_i$) ergibt.

2. Verfahren nach Anspruch 1, **dadurch gekennzeichnet, dass**

   - die ersten Abtastsignale ($S_{ABS}$) eine grobe Absolutpositionsinformation innerhalb der Messdistanz ($D$) liefern,
   - und die zweiten Abtastsignale ($S_{INC}$) eine Relativpositionsinformation mit einer Auflösung liefern, die höher als die Absolutpositionsauflösung ist und
   - die interpolierten ersten und zweiten Abtastsignale ($S_{ABS\_IP}$, $S_{INC\_IP}$) über eine Kombinations-Einheit ($K$) zu einer Absolutpositionsinformation ($POS_{ABS}$) kombiniert werden, deren Auflösung der Auflösung der Relativpositionsinformation entspricht.

3. Verfahren nach Anspruch 2, **dadurch gekennzeichnet, dass** die ersten Abtastsignale ($S_{ABS}$) über die Messdistanz ($D$) eine einzige Signalperiode aufweisen, während die zweiten Abtastsignale ($S_{INC}$) über die Messdistanz ($D$) N Signalperioden aufweisen.

4. Verfahren nach Anspruch 1, **dadurch gekennzeichnet, dass** ein einziger Phasenkorrekturwert ($\varphi_{korr}$) ermittelt wird und wobei der Teilabschnitt ($D$) der gesamten Messdistanz ($D$) entspricht.

5. Verfahren nach Anspruch 4, **dadurch gekennzeichnet, dass** der Phasenkorrekturwert ($\varphi_{korr}$) in einer Speichereinheit (MEM) abgespeichert wird.

6. Verfahren nach Anspruch 5, **dadurch gekennzeichnet, dass** der Phasenkorrekturwert ($\varphi_{korr}$) vor dem Abspeichern in der Speichereinheit (MEM) in eine binäre Zahl umgerechnet wird.

7. Verfahren nach Anspruch 3 und 4, **dadurch gekennzeichnet, dass** der Phasenkorrekturwert ($\Delta\varphi_{korr}$) über der gesamten Messdistanz ($D$) der Bedingung

$$| \Delta\varphi + \varphi_{korr} | < 180°/N$$

genügt, wobei $\Delta\varphi$ die Phasenlageabweichung der Ist-Phasenlage der ersten und zweiten Abtastsignale ($S_{ABS}$, $S_{INC}$) von der idealen Soll-Phasenlage angibt.

8. Verfahren nach Anspruch 1, wobei für mehrere Teilabschnitte ($D_i$) jeweils ein Phasenkorrekturwert ($\Delta\varphi_{korr,i}$) ermittelt wird und die Summe der verschiedenen Teilabschnitte ($D_i$) der Messdistanz ($D$) entspricht.

9. Verfahren nach Anspruch 8, wobei die Phasenkorrekturwerte ($\varphi_{korr,i}$) für die verschiedenen Teilabschnitte ($D_i$) in einer tabellenförmig organisierten Speichereinheit (MEM) positionsabhängig abgespeichert werden und die Phasenkorrekturwerte ($\varphi_{korr,i}$) der Speichereinheit im Messbetrieb positionsabhängig ausgelesen und zur Korrektur verwendet werden.

**Claims**

1. Method for determining the absolute position of two objects movable relative to one another over a specific measuring distance (D), in which

• first periodic scanning signals ($S_{ABS}$) are generated from the scanning of a first graduated scale (M1) with a first graduation period ($TP_{ABS}$),

• second periodic scanning signals ($S_{INC}$) are generated from the scanning of a second graduated scale (M2) with a second graduation period ($TP_{INC}$), wherein the second graduation period ($TP_{INC}$) is selected to be finer than the first graduation period ($TP_{ABS}$),

• the first and second scanning signals ($S_{ABS}$, $S_{INC}$) are respectively interpolated, and

• the first and/or second scanning signals ($S_{ABS}$, $S_{INC}$) are corrected with respect to an ideal phase position relative to one another by applying phase correction values ($\Delta\varphi_{korr}$) to the first and/or second interpolated scanning signals ($S_{ABS\_IP}$, $S_{INC\_IP}$),

**characterised in that**

a phase correction value ($\varphi_{korr}$, $\varphi_{korr,i}$) determined via a calibration measurement is determined for at least a part-section ($D$, $D_i$) of the measuring distance (D), wherein the phase correction value ($\varphi_{korr}$) results as mean value from the [PU1]maximum and minimum phase position deviation ($\Delta\varphi_{max}$, $\Delta\varphi_{min}$) of the actual phase position from the set phase position in the part-section ($D$, $D_i$).

2. Method according to Claim 1, **characterised in that**

• the first scanning signals ($S_{ABS}$) provide gross absolute position information within the measuring distance (D),

• and the second scanning signals ($S_{INC}$) provide relative position information with a resolution, which is higher than the absolute position resolution, and

• the interpolated first and second scanning signals ($S_{ABS\_IP}$, $S_{INC\_IP}$) are combined via a combination unit (K) to form absolute position information ($POS_{ABS}$), the resolution of which corresponds to the resolution of the relative position information.

3. Method according to Claim 2, **characterised in that** the first scanning signals ($S_{ABS}$) have a single signal period over the measuring distance (D), while the second scanning signals ($S_{INC}$) have N signal periods over the measuring distance (D).

4. Method according to Claim 1, **characterised in that** a single phase correction value ($\varphi_{korr}$) is determined, and wherein the part-section (D) corresponds to the entire measuring distance (D).

5. Method according to Claim 4, **characterised in that** the phase correction value ($\varphi_{korr}$) is stored in a memory unit (MEM).

6. Method according to Claim 5, **characterised in that** the phase correction value ($\varphi_{korr}$) is converted into a binary number before being stored in the memory unit (MEM).

7. Method according to Claim 3 and 4, **characterised in that** over the whole measuring distance (D) the phase correction value ($\varphi_{korr}$) complies with the condition

$$|\Delta\varphi + \varphi_{korr}| < 180° / N$$

wherein $\Delta\varphi$ indicates the phase position deviation of the actual phase position of the first and second scanning signals ($S_{ABS}$, $S_{INC}$) from the ideal set phase position.

8. Method according to Claim 1, wherein for several part-sections ($D_i$) a respective phase correction value ($\varphi_{korr,i}$) is determined and the sum of the different part-sections ($D_i$) corresponds the measuring distance (D).

9. Method according to Claim 8, wherein the phase correction values ($\varphi_{korr,i}$) for the different part-sections ($D_i$) are stored in a position-dependent manner in a memory unit (MEM) organised in table form, and the phase correction values ($\varphi_{korr,i}$) of the memory unit are read out in a position-dependent manner in the measurement operation and are used for correction.

**Revendications**

1. Procédé de détermination de la position absolue de deux objets mobiles l'un par rapport à l'autre sur une distance de mesure (D) prédéterminée, selon lequel

   - à partir du palpage d'une première division de mesure (M1) présentant une première période de division (TP$_{ABS}$), on produit des premiers signaux de palpage (S$_{ABS}$),
   - à partir du palpage d'une deuxième division de mesure (M2) présentant une deuxième période de division (TP$_{INC}$), on produit des deuxièmes signaux de palpage (S$_{INC}$), la deuxième période de division (TP$_{INC}$) étant choisie plus fine que la première période de division (TP$_{ABS}$),
   - on interpole respectivement les premiers et deuxièmes signaux de palpage (S$_{ABS}$, S$_{INC}$),
   - on corrige les premiers et/ou deuxièmes signaux de palpage (S$_{ABS}$, S$_{INC}$) en fonction d'une relation de phase idéale entre ceux-ci, en appliquant des valeurs de correction de phase ($\varphi_{korr}$) aux premiers et/ou deuxièmes signaux de palpage interpolés (S$_{ABS-IP}$, S$_{INC-IP}$),

   **caractérisé par le fait**
   **qu'**on détermine sur une mesure d'étalonnage au moins une valeur de correction de phase ($\varphi_{korr}$, $\varphi_{korr,i}$) pour au moins un tronçon élémentaire (D, D$_i$) de la distance de mesure (D), la valeur de correction de phase ($\varphi_{korr}$) correspondant à la valeur moyenne des écarts de phase maximum et minimum ($\Delta\varphi_{max}$, $\Delta\varphi_{min}$) de la relation de phase réelle par rapport à la relation de phase théorique dans le tronçon élémentaire (D, D$_i$).

2. Procédé selon la revendication 1, **caractérisé par le fait que**

   - les premiers signaux de palpage (S$_{ABS}$) fournissent une information de position absolue grossière à l'intérieur de la distance de mesure (D),
   - les deuxièmes signaux de palpage (S$_{INC}$) fournissent une information de position relative avec une résolution qui est supérieure à la résolution de position absolue,
   - les premiers et deuxièmes signaux de palpage interpolés (S$_{ABS-IP}$, S$_{INC-IP}$) sont combinés au moyen d'une unité de combinaison (K) pour former une information de position absolue (POS$_{ABS}$), dont la résolution correspond à la résolution de l'information de position relative.

3. Procédé selon la revendication 2, **caractérisé par** lé fait que les premiers signaux de palpage (S$_{ABS}$) présentent une période de signal unique sur la distance de mesure (D), tandis que les deuxièmes signaux de palpage (S$_{INC}$) présentent N périodes de signal sur la distance de mesure (D).

4. Procédé selon la revendication 1, **caractérisé par le fait qu'**on détermine une valeur de correction de phase ($\varphi_{korr}$) unique, et que le tronçon élémentaire (D) correspond à la distance de mesure (D) totale.

5. Procédé selon la revendication 4, **caractérisé par le fait que** la valeur de correction de phase ($\varphi_{korr}$) est mémorisée dans une unité de mémoire (MEM).

6. Procédé selon la revendication 5, **caractérisé par le fait que** la valeur de correction de phase ($\Delta\varphi_{korr}$) est convertie en un nombre binaire avant sa mémorisation dans l'unité de mémoire (MEM).

7. Procédé selon les revendications 3 et 4, **caractérisé par le fait que** la valeur de correction de phase ($\varphi_{korr}$), sur l'ensemble de la distance de mesure (D), satisfait la condition

$$\left|\Delta\varphi + \varphi_{korr}\right| < 180°/N$$

   $\Delta\varphi$ indiquant l'écart de phase de la relation de phase réelle des premier et deuxième signaux de palpage (S$_{ABS}$, S$_{INC}$) par rapport à la relation de phase théorique idéale.

8. Procédé selon la revendication 1, selon lequel on détermine chaque fois pour plusieurs tronçons élémentaires (D$_i$) une valeur de correction de phase ($\varphi_{korr,i}$) et la somme des différents tronçons élémentaires (D$_i$) correspond à la distance de mesure (D).

**9.** Procédé selon la revendication 8, selon lequel les valeurs de correction de phase ($\varphi_{korr,i}$) pour les différents tronçons élémentaires ($D_i$) sont mémorisées en fonction de la position dans une unité de mémoire (MEM) agencée en tableau et les valeurs de correction de phase ($\varphi_{korr,i}$) de l'unité de mémoire (MEM) sont lues en service en fonction de la position et utilisées à des fins de correction.

FIG. 1

MEM

$POS_{ABS}$

K

$\varphi_{KORR}$

$+/-$

$S_{ABS\_IP}$

KORR

$+/-$

$S_{INC\_IP}$

IPO1

IPO2

$S_{ABS}$

$S_{INC}$

A

M1

M2

M

## FIG. 2

## FIG. 3

FIG. 4

FIG. 5